Europäisches Patentamt

European Patent Office

Office européen des brevets

(19)

(11) Numéro de publication: **0 271 378 B1**

(12) **FASCICULE DE BREVET EUROPEEN**

(45) Date de publication de fascicule du brevet:
**19.06.91**

(51) Int. Cl.5: **G01N 30/56**

(21) Numéro de dépôt: **87402508.3**

(22) Date de dépôt: **06.11.87**

(54) **Appareil de chromatographie en phase liquide.**

(30) Priorité: **13.11.86 FR 8615724**

(43) Date de publication de la demande:
**15.06.88 Bulletin 88/24**

(45) Mention de la délivrance du brevet:
**19.06.91 Bulletin 91/25**

(84) Etats contractants désignés:
**AT BE CH DE ES GB IT LI NL**

(56) Documents cités:
**EP-A- 0 008 921       EP-A- 0 106 746
EP-A- 0 145 578       US-A- 3 966 609
US-A- 4 211 658       US-A- 4 563 275**

(73) Titulaire: **Couillard, François
9 Avenue de la Concorde
F-64000 Pau(FR)**

(72) Inventeur: **Couillard, François
9 Avenue de la Concorde
F-64000 Pau(FR)**

(74) Mandataire: **Cuer, André
Cabinet Ballot-Schmit 7, rue Le Sueur
F-75116 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention a pour objet un appareil de chromatographie en phase liquide constitué par une colonne tubulaire qui est destinée à recevoir une charge de matière solide pulvérulente et qui comporte à ses extrémités des plaques poreuses, l'une de ces plaques y étant fixée par des moyens appropriés et l'autre étant susceptible de se déplacer à l'intérieur du tube sous l'action d'un vérin et de comprimer ainsi la charge dans la colonne.

Un appareil de chromatographie de ce genre est déjà connu et il est décrit dans le brevet français FR-A-2556099. Cet appareil est d'un fonctionnement très satisfaisant, mais il présente néanmoins deux inconvénients :

- La mise de la colonne en état de fonctionnement exige que l'on y verse tout d'abord de la poudre de particules adsorbantes, soit en vrac, soit en suspension dans un liquide, puis que l'on referme la colonne à l'aide de la plaque poreuse servant de couvercle avant de déplacer ensuite l'autre plaque poreuse sous l'action du vérin ;
- Lorsque l'on veut, en fin de chromatographie, récupérer intacte la charge de poudre adsorbante aux diverses "altitudes" auxquelles se trouvent adsorbés les divers composants du mélange analysé par passage dans la colonne, il faut procéder à une opération fort délicate d'enlèvement de la charge de poudre hors de la colonne.

Le but de la présente invention est de remédier à ces inconvénients et de réaliser un appareil de chromatographie qui permette une mise en état de fonctionnement rapide de la colonne et qui facilite la récupération intacte de la charge adsorbante, tout en étant de réalisation simple et peu coûteuse.

Selon l'invention, ces buts, et d'autres qui apparaîtront par la suite, sont atteints grâce à un appareil de chromatographie en phase liquide du genre spécifié ci-avant qui est caractérisé par le fait que la charge est contenue dans une cartouche rigide ou semi-rigide d'un diamètre extérieur sensiblement égal au diamètre intérieur de la colonne, cette dernière étant elle-même coupée en deux demi-cylindres égaux que l'on rapproche l'un de l'autre après insertion de la cartouche et que l'on tient serrés ensemble par tout moyen approprié.

On dispose ainsi d'une colonne prête à l'emploi, et comme la cartouche contenant la charge ne subit pratiquement pas de déformations en fonctionnement, la récupération de l'ensemble formé par la cartouche, la charge et les produits analysés ou préparés est extrêmement facile, de sorte que la colonne peut resservir dans un très court délai pour une nouvelle manipulation.

La charge de matière adsorbante étant retenue dans la cartouche par les plaques poreuses, et non plus directement dans la colonne, il est possible de mettre en place ces plaques et de charger la cartouche avec de la poudre adsorbante bien avant son insertion dans la colonne, et ce, par exemple, chez le fabricant de poudre ou de cartouches. La manipulation, le transport et le stockage des cartouches chargées deviennent alors très simples.

L'intérieur de la colonne, à chacune de ses extrémités, comporte des gorges annulaires destinées à recevoir des épaulements correspondants qui sont ménagés sur les têtes de colonnes pour fixer leur position pendant le fonctionnement de la colonne.

Il est avantageux que l'une des têtes de colonne se termine par un piston de diamètre extérieur sensiblement égal au diamètre intérieur de la cartouche, une gorge annulaire étant ménagée dans la surface latérale de ce piston pour recevoir un joint d'étanchéité.

Avantageusement, l'autre tête de colonne est constituée par un vérin qui comprend une entretoise tubulaire munie à ses extrémités de deux pistons dont le premier est pratiquement identique au piston terminant la première tête de colonne, et le deuxième de ces pistons pouvant coulisser dans un cylindre de compression de diamètre intérieur supérieur à celui de la cartouche, lequel est prolongé dans la direction de la colonne par un manchon de diamètre extérieur sensiblement égal au diamètre intérieur de la colonne et pourvu intérieurement d'un épaulement destiné à s'engager dans une gorge annulaire correspondante de l'intérieur de la colonne, le premier de ces pistons comportant un passage axial raccordé à un tube d'alimentation et traversé par le liquide à analyser ou à préparer.

Dans un mode de réalisation avantageux de l'invention, un embout est vissé axialement dans le premier piston spécifié ci-dessus, un raccord étant à son tour monté sur cet embout et raccordé au tube d'alimentation en liquide, ce dernier traversant les parois de l'entretoise et de la colonne pour sortir de cette dernière et se prolongeant vers la cartouche par un passage axial ménagé à travers le raccord, l'embout et le premier cylindre pour permettre au liquide à analyser ou à préparer de circuler entre un réservoir extérieur et la cartouche de l'invention.

De préférence, le tube d'alimentation en liquide est raccordé à une tubulure qui est reliée au réservoir extérieur et sur laquelle sont montés une pompe et un injecteur. Avantageusement, la chambre du cylindre de compression qui est opposée à la colonne est reliée à la tubulure d'alimentation en question entre sa pompe et son injecteur, l'autre chambre de ce cylindre étant reliée à l'atmosphère.

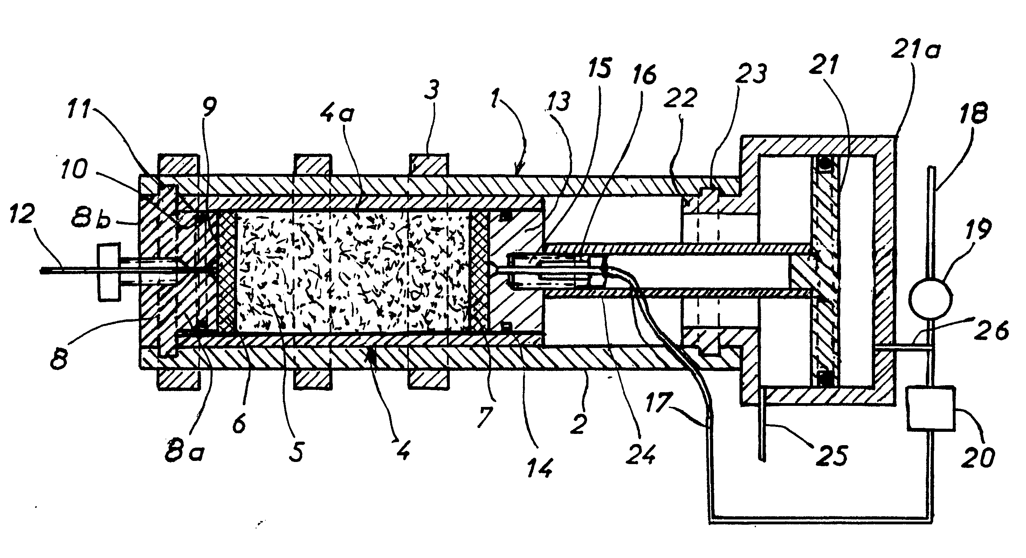

La description qui va suivre, et qui ne comporte aucun caractère limitatif, permettra de bien comprendre comment la présente invention peut être mise en pratique. Elle doit être lue en regard du dessin annexé dont la figure unique représente une vue en coupe longitudinale de l'appareil de chromatographie selon l'invention.

Comme on le voit sur cette figure, la colonne qui est désignée dans son ensemble par le repère 1 est constitué par deux demi-coquilles 2 dont une seule est représentée sur la figure, l'autre demi-coquille étant de forme exactement semblable à la première. Leur rapprochement forme un cylindre que l'on maintient assemblé par tout moyen adéquat comme des bagues de serrage 3 ceinturant la colonne 1, ou encore des brides assemblées par des vis.

A l'intérieur de la colonne 1 est placée une cartouche 4 en matière rigide ou semi-rigide dont le diamètre extérieur est sensiblement égal au diamètre intérieur du cylindre formé par les deux demi-coquilles 2. Elle contient une charge de matière adsorbante 5 en poudre ou en suspension dans un liquide qui est enfermée entre deux plaques poreuses 6 et 7 en forme de disques, la première, 6, à gauche sur la figure, étant fixée à l'enveloppe 4a de la cartouche 4 par des moyens appropriés non représentés, et la seconde, 7, à droite sur la figure, pouvant se déplacer vers l'intérieur de la cartouche 4, ainsi que cela sera précisé plus loin.

Lorsque la cartouche 4 est en place à l'intérieur de la colonne 1, la plaque poreuse 6 s'appuie sur une première tête de colonne 8 qui ferme cette dernière et qui comprend deux parties de diamètres différents 8a et 8b. La partie 8a s'insère dans l'enveloppe 4a de la cartouche 4, son diamètre extérieur étant très légèrement inférieur au diamètre intérieur de cette enveloppe. Sur sa partie frontale 9 s'appuie la plaque poreuse 6, un joint torique 10 étant logé dans une gorge ménagée dans la tête 8 pour assurer l'étanchéité entre cette dernière et l'enveloppe 4a de la cartouche 4.

L'autre partie 8b de la tête de colonne 8, dont le diamètre extérieur est sensiblement égal au diamètre intérieur de la colonne 1 dans laquelle elle s'insère, présente un épaulement annulaire 11 qui vient se loger, lors de l'assemblage des deux demi-coquilles 2 de la colonne 1, dans une gorge de forme complémentaire ménagée dans la paroi intérieure de la colonne 1.

Une canalisation axiale 12 traversant la tête de colonne 8 permet au liquide à analyser ou à préparer de s'écouler vers l'extérieur à partir de la cartouche, et ce, à travers la plaque poreuse 6.

L'autre tête de colonne 13 présente un diamètre extérieur sensiblement égal au diamètre intérieur de l'enveloppe 4a de la cartouche 4 dans laquelle elle peut coulisser, un joint torique 14 logé dans une gorge de forme correspondante de la tête 13 assurant l'étanchéité entre cette dernière et l'enveloppe 4a de la cartouche 4.

Un embout axial 15 est vissé dans la tête de colonne 13. Il fait saillie vers l'extérieur et il reçoit un raccord 16 sur lequel est montée par tout moyen convenable l'extrémité d'un tube souple 17 qui permet d'injecter dans la cartouche 4, à travers un passage ménagé dans l'axe du raccord 16, de l'embout 15 et de la tête 13, le liquide à analyser ou à préparer qui provient d'un réservoir non représenté à travers une tubulure d'alimentation 18 sur laquelle sont montés une pompe 19 et un injecteur 20. Toutefois, il serait également possible d'amener le liquide par la canalisation 12, à l'autre extrémité de la colonne 1, et de l'évacuer par le tube 17.

La partie de l'embout 15 qui dépasse la tête 13 est coiffée par une entretoise tubulaire 24 qui, à son autre extrémité, est solidaire d'un piston 21 dont le diamètre est supérieur à celui de la colonne 1. Ce piston 21 se déplace axialement dans un cylindre de compression 21a prolongé vers la colonne 1 par un manchon 22 dont le diamètre extérieur est sensiblement égal au diamètre intérieur de la colonne 1 dans laquelle il est enfoncé et maintenu en place grâce à un épaulement annulaire 23 qui, lors de l'assemblage des deux demi-coquilles 2, vient se loger dans une gorge de forme complémentaire qui est ménagée dans la surface latérale interne de la colonne 1.

Enfin, l'entretoise tubulaire 24 montée entre la tête de colonne 13 et le piston 21 limite la course de ce dernier vers la cartouche 4, et elle peut être constituée par deux demi-colonnes assemblées par tout moyen approprié afin de faciliter le chargement de la colonne 1, cependant que le cylindre de compression 21a comporte une tubulure 25 de mise à l'atmosphère débouchant sur la face du piston 21 qui est tournée vers la colonne 1, ainsi qu'une arrivée 26 de liquide sous pression qui débouche sur l'autre face du piston 21, ce liquide étant destiné à mouvoir le piston 21 et à comprimer ainsi la charge 5 de la cartouche 4 par l'intermédiaire de l'entretoise 24 et de la plaque poreuse 7. Ce liquide peut être le liquide vecteur lui-même qui est injecté dans la cartouche 4, auquel cas la tubulure d'arrivée 26 est raccordée à la tubulure d'alimentation 18 entre la pompe 19 et l'injecteur 20. Le diamètre du piston 21 étant supérieur à celui de la colonne 1, on comprend que l'on obtient ainsi une amplification hydraulique qui permet une auto-compression axiale du contenue de la cartouche 4 qui est toujours plus intense que la force appliquée sur les têtes de colonne par le liquide à l'intérieur de la cartouche. Toutefois, il serait possible de prévoir une autre source de pression pour le piston 21.

On comprendra aisément que la longueur de l'entretoise tubulaire 24 doit être choisie en fonction de celle de la cartouche 4 pour que le piston 21 puisse disposer de la course voulue à l'intérieur du cylindre 21a. Ceci permet d'ailleurs l'utilisation de cartouches de longueurs différentes : lorsque l'on change de longueur de cartouche, il suffit de choisir une nouvelle entretoise 24 telle que la somme de sa longueur et de celle de la nouvelle cartouche reste à peu près inchangée par rapport à la manipulation précédente.

**Revendications**

1.  Appareil de chromatographie en phase liquide caractérisé en ce qu'il est constitué par une colonne tubulaire (1) qui est destinée à recevoir une charge (5) de matière solide pulvérulente, ladite charge (5) étant contenue dans une cartouche interchangeable rigide ou semi-rigide (4) d'un diamètre extérieur sensiblement égal au diamètre intérieur de la colonne (1), cette cartouche (4) comportant à ses extrémités des plaques poreuses (6,7), l'une de ces plaques (6) y étant fixée par des moyens appropriés, et l'autre (7) étant susceptible de se déplacer à l'intérieur de la cartouche (4) sous l'action d'un vérin (22) et de comprimer ainsi la charge (5) qui est contenue dans ladite colonne (1), cette dernière étant coupée en deux demi-cylindres égaux (2) que l'on rapproche l'un de l'autre après insertion de ladite cartouche (4) et que l'on tient serrés ensemble par tout moyen approprié.

2.  Appareil de chromatographie selon la revendication 1, caractérisé par le fait que l'intérieur de la colonne (1) comporte à chacune de ses extrémités des gorges annulaires destinées à recevoir des rondelles et/ou des épaulements correspondants (11, 23) d'une tête de colonne (8) ou dudit vérin (22) pour fixer leur position pendant le fonctionnement de la colonne.

3.  Appareil de chromatographie selon l'une quelconque des revendications 1 et 2, caractérisé par le fait que l'une des têtes de colonne (8) se termine par un piston (8a) de diamètre extérieur sensiblement égal au diamètre intérieur de la cartouche (4), une gorge annulaire étant ménagée dans la surface latérale dudit piston (8a) pour recevoir un joint d'étanchéité (10).

4.  Appareil de chromatographie selon l'une quelconque des revendications 1 à 3, caractérisé par le fait que l'autre tête de colonne est constituée par ledit vérin qui comprend une entretoise tubulaire (24) munie à ses extrémités de deux pistons (13, 21) dont le premier (13) est pratiquement identique au piston (8a) terminant la première tête de colonne (8), et le deuxième de ces pistons (21) pouvant coulisser dans un cylindre de compression (21a) de diamètre intérieur supérieur à celui de la cartouche (4), ce cylindre de compression (21a) étant prolongé dans la direction de la colonne (1) par un manchon (22) de diamètre extérieur sensiblement égal au diamètre intérieur de la colonne (1) et pourvu intérieurement d'un épaulement (23) destiné à s'engager dans une gorge annulaire correspondante de l'intérieur de la colonne (1), le premier (13) desdits pistons comportant un passage axial raccordé à un tube d'alimentation (17) et traversé par le liquide à analyser ou à préparer.

5.  Appareil de chromatographie selon la revendication 4, caractérisé par le fait qu'un embout (15) est vissé axialement dans ledit premier piston (13), un raccord (16) étant à son tour monté sur ledit embout (15) et raccordé audit tube d'alimentation (17) qui traverse ladite entretoise (24), puis la paroi (2) de ladite colonne (1) pour sortir de cette dernière, et qui se prolonge vers la cartouche (4) par un passage axial ménagé à travers ledit raccord (16), ledit embout (15) et ledit premier cylindre (13) pour permettre la circulation du liquide à analyser ou à préparer à partir d'un réservoir extérieur.

6.  Appareil de chromatographie selon l'une quelconque des revendications 4 et 5, caractérisé par le fait que ledit tube d'alimentation (17) est raccordé à une tubulure d'alimentation (18) qui est reliée audit réservoir extérieur de liquide à analyser ou à préparer et sur laquelle sont montés une pompe (19) et un injecteur (20).

7.  Appareil de chromatographie selon la revendication 6, caractérisé par le fait que la chambre dudit cylindre de compression (21a) qui est opposée audit vérin (13, 24, 21) est reliée par une tubulure (26) à ladite tubulure d'alimentation (18) entre la pompe (19) et l'injecteur (20), alors que son autre chambre comporté une tubulure de mise à l'atmosphère (25).

8.  Appareil de chromatographie selon l'une quelconque des revendications 1 à 7, caractérisé par le fait que lesdites cartouches (4) sont assemblées et remplies au préalable en usine ou en atelier.

9.  Appareil de chromatographie selon l'une quelconque des revendications 1 à 8, caractérisé par le fait que la longueur de ladite entretoise (24) est choisie en fonction de celle de ladite cartouche (4).

**Claims**

1. Apparatus for liquid chromatography characterized by the fact it comprises a tubular column (1) for receiving a charge (5) of powdery solid material, the said charge (5) being contained in a removable rigid or semi-rigid cartridge (4) with an outside diameter approximately equal to the inside diameter of column (1), this cartridge (4) having to its ends porous plates (6, 7), one of said plates (6) being fastened thereon by appropriate means and the other (7) being able to move inside the cartridge (4) by means a jack (22) to thus compress the charge (5) contained in the said column (1) this last being formed by two equal half-cylinders (2) which are brought closer together, after insertion of the said cartridge (4) and which are clamped together by any appropriate mean.

2. Chromatography apparatus according to claim 1, wherein the inside of column (1) comprises, at each of its ends, annular grooves for receiving corresponding washers or shoulders (11, 23), respectively, of a column head (8) or said jack (22), respectively, to fix their position during operation of the column.

3. Chromatography apparatus according anyone of claims 1 or 2 wherein one of the column heads (8) is terminated by a piston (8a) with an outside diameter approximately equal to the inside diameter of cartridge (4), an annular groove being made in the lateral surface of said piston (8a) for receiving a seal (10).

4. Chromatography apparatus according to anyone of the claims 1 to 3 wherein the other column head is constituted by the said jack (22), which comprises a tubular brace (24) provided at its two ends with first and second pistons (13, 21), respectively, said first piston (13), being sensibly identical to the jack (8a) at the end of the first column head (18), said second piston (21), being slidably positioned within a compression cylinder (21a) with an inside diameter greater than that of cartridge (4), said compression cylinder (21a) being extended in the direction of column (1) by a sleeve (22) with an outside diameter approximately equal to the inside diameter of column (1) and provided on the inside with a shoulder (23) for engaging in a corresponding annular groove of the inside of column (1), the first (13) of said pistons comprising an axial passage connected to a supply tube (17) through which liquid to be analyzed or prepared passes.

5. Chromatography apparatus according to claim 4, wherein a tip (15) is screwed axially into said first piston (13), a connector (16) in turn being mounted on said tip (15) and connected to said supply tube (17), said supply tube extending through said brace (24) and wall (2) of said column (1) to extend therebeyond, and which is extended from said tip (15) to cartridge (4) by an axial passage made through said connector (16), said tip (15) and said first cylinder (13), to allow the circulation of the liquid which is to be analyzed or prepared from an outside tank.

6. Chromatography apparatus according anyone of the claims 4 and 5 wherein said supply tube (17) is connected to a supply pipe (18) which is connected to said outside tank of liquid to be analyzed or prepared and on which mounted a pump (19) and an injector (20).

7. Chromatography apparatus according to claim 6, wherein the chamber of said compression cylinder (21a) opposite to the said piston (13, 21) is connected by a pipe (26) to said supply pipe (18) between pump (19) and injector (20), while a pipe (25) for connection to the atmosphere is connected to the other chamber of compression cylinder.

8. Chromatography apparatus according anyone of the claims 1 to 7 wherein said cartridges (4) are pre-assembled and pre-filled in factory or shop.

9. Chromatography apparatus according anyone of the claims 1 to 8 wherein the length of said brace (24) is selected as a function of that of said cartridge (4).

**Ansprüche**

1. Vorrichtung für die Chromatographie in der Flüssigphase, dadurch gekennzeichnet, daß sie aus einer rohrförmigen Säule (1) besteht, die eine aus pulverförmigem festem Stoff bestehende Charge (5) aufnimmt, wobei die Charge (5) in einer austauschbaren steifen oder halbsteifen, einen dem Innendurchmesser dar Säule (1) entsprechende Außendurchmesser aufweisenden Patrone (4) untergebracht ist, wobei diese Patrone (4) an ihren Enden poröse Platten (6 und 7) besitzt, wovon die eine Platte (6) dort durch geeignete Einrichtungen befestigt ist, wobei die andere Platte sich innerhalb dar Patrone (4) unter der Wirkung einer Druckschraube (22) unter Zusammendrücken der Charge (5) bewegen kann, die in der Säule (1) enthalten ist, wobei letztere in zwei gleichen Halbzylindern (2) aufgeteilt ist, die man nach dem Einführen der Patrone (4) zusammenführt und durch geeignete Einrichtungen im zusammengedrückter Stellung hält.

2. Vorrichtung für die Chromatographie nach Anspruch 1, dadurch gekennzeichnet daß der Hohlraum der Säule (1) an ihren beiden Enden ringförmige Nuten in der Wandung aufweist, die die entsprechenden kreisförmigen Scheiben und/oder Schultern (11 and 29) eines Säulenkopfes (8) oder der Druckschraube (22) aufnehmen, um deren Stellung beim Betreib der Säule festzulegen.

3. Vorrichtung für die Chromatographie nach einem der Ansprüche 1 und 2, dadurch gekennzeichnet, daß einer der Säülenköpfe (8) in Form eines Kolbens (8a) endet, dessen Außendurchmesser dem Innendurchmesser der Patrone (4) im wesentlichen entspricht, wobei eine ringförmige Nut in der Seitenwandung des Kolbens (8a) vorgesehen ist, um eine Dichtung (10) aufzunehmen.

4. Vorrichtung für die Chromatographie nach einem dar Ansprüche 1 bis 3, dadurch gekennzeichnet, daß der andere Kopf der Säule durch die Druckschraube gebildet ist, die ein rohrförmiges Zwischenstück (24) aufweist, das an seinen Enden mit zwei Kolben (13 und 21) versehen ist, wovon ersterer (13) im wesentlichen dem das Ende des ersten Kopfes der Säule (8) bildenden Kolben (8a) entspricht und wobei der zweite Kolben (21) innerhalb eines Druckzylinders (21a) beweglich geführt ist, dessen Innendurchmesser größer ist als der Innendurchmesser der Patrone (4), und wobei dieser Druckzylinder (21a) in der Richtung der Säule (1) durch eine Hülse (22) verlängert ist, deren Außendruchmesser im wesentlichen dem Innendruchmesser der Säule (1) entspricht und innen mit einer Schulter (23) versehen ist, die in einer entsprechenden ringförmigen Nut in der Innenwandung der Säule (1) eingreift, wobei der erste Kolben (13) einen axialen Kanal aufweist, der mit einer Vorsorgungsleitung (17) verbunden ist und die zu analysierende oder zu behandelnde Flüssigkeit leitet.

5. Vorrichtung für die Chromatographie nach Anspruch 4, dadurch gekennzeichnet, daß ein Schraubverbindungsstück (15) axial in den ersten Kolben (13) hineingeschraubt ist, wobei eine Verbindung (16) ihreseits an diesem Zwischenstück (15) angebracht und mit der Vorsorgungsleitung (17) verbunden ist, die sich durch das Zwischenstück (24) und dann durch die Wandung (2) der Säule (1) erstreckt, um letztere zu verlassen, und die in Richtung auf die Patrone (4) durch einen axialen, sich durch die Verbindung (16), das Verbindungstück (15) und den ersten Zylinder (13) erstreckenden Kanal Verlängert ist, um eine Umwälzung der Flüssigkeit, die zu analysieren oder zu behandeln ist, von einem Außentank her zu ermöglichen.

6. Vorrichtung für die Chromatographie nach einem der Ansprüche 4 und 5, dadurch gekennzeichnet, daß die Vorsorgungsleitung (17) mit einer Vorsorgungsröhre (18) verbunden ist, die mit dem Außentank verbunden ist, der die zu analysierende oder zu behandelnde Flüssigkeit enthält, und an dem eine Pumpe (19) und eine Einspritzeinrichtung angebracht sind.

7. Vorrichtung für die Chromatographie nach Anspruch 6, dadurch gekennzeichnet, daß die Kammer des Druckzylinders (21a), die der Druckschraube (13, 24 und 21) entgegengesetzt ist, durch eine Röhre (26) mit der Vorsorgungsröhre (18) zwischen der Pumpe (19) und der Einspritzeinrichtung (20) verbunden ist, wobei seine andere Kammer eine Röhre (25) aufweist, die mit der Atmosphäre (25) in Verbindung steht.

8. Vorrichtung für die Chromatographie nach einem der Ansprüche 1 bis 7, dadurch gekennzeichnet, daß die Patronen (4) vorab in der Fabrik oder in einer Werkstatt zusammengestellt und eingeführt werden.

9. Vorrichtung für die Chromatographie nach einem der Ansprüche 1 bis 8, dadurch gekennzeichnet, daß die Länge des Zwischenstückes (24) in Abhängigkeit von der der Patrone gewählt (4) wird.